Europäisches Patentamt

European Patent Office

Office européen des brevets

(11) Numéro de publication : **0 352 148 B1**

(12) **FASCICULE DE BREVET EUROPEEN**

(45) Date de publication du fascicule du brevet :
15.07.92 Bulletin 92/29

(51) Int. Cl.⁵ : **G01V 11/00**

(21) Numéro de dépôt : **89401353.1**

(22) Date de dépôt : **16.05.89**

(54) **Dispositif et méthode pour effectuer des mesures ou des interventions dans un puits.**

(30) Priorité : **20.05.88 FR 8806828**

(43) Date de publication de la demande :
**24.01.90 Bulletin 90/04**

(45) Mention de la délivrance du brevet :
**15.07.92 Bulletin 92/29**

(84) Etats contractants désignés :
**DE GB IT NL**

(56) Documents cités :
**EP-A- 0 256 601**
**FR-A- 1 249 236**
**FR-A- 2 090 370**
**FR-A- 2 592 655**
**GB-A- 2 019 524**

(73) Titulaire : **INSTITUT FRANCAIS DU PETROLE**
**4, Avenue de Bois Préau**
**F-92502 Rueil-Malmaison (FR)**

(72) Inventeur : **Delacour, Jacques**
**18, Rue Guérin**
**F-75016 Paris (FR)**
Inventeur : **Dawans, François**
**1, Rue Pasteur**
**F-78380 Bougival (FR)**
Inventeur : **Huvey, Michel**
**2, Avenue des Pinsons**
**F-78380 Bougival (FR)**

EP 0 352 148 B1

# Description

La présente invention concerne un dispositif, une application de ce dispositif et une méthode utilisant ce dispositif, permettant d'effectuer des mesures ou/et interventions dans un puits au niveau de formations environnantes.

L'invention est notamment applicable lorsqu'il s'agit d'effectuer des mesures et/ou interventions au niveau de formations géologiques traversées par un puits. Dans ce cas, les mesures effectuées peuvent comporter l'enregistrement de la pression et de la température de fond du puits, la mesure (focalisée ou non) de la résistivité électrique des formations, ainsi que des mesures acoustiques, nucléaires, etc...

Ces techniques de mesure ou d'intervention sont bien connues des spécialistes et ne seront pas décrites ici plus en détail.

La présente invention est particulièrement bien adaptée pour effectuer des mesures ou des interventions dans un puits de production d'effluents pétrolier. Ce puits pourra comporter de préférence des tubes ou drains qui en délimitent les parois.

Le brevet EP-A-0/256.601 décrit par exemple une méthode et un dispositif pour forer dans le sol à l'aide d'un ensemble comportant deux tubes concentriques en métal ou en matériau de synthèse, rigide et débobiné d'un touret par déformation plastique du matériau des tubes.

On connait le brevet US-4.685.816 qui décrit un dispositif de mesure ou d'intervention dans un puits, comportant un instrument disposé à la partie inférieure d'un tube creux initialement enroulé sur un touret que l'on fait tourner pour déplacer l'instrument dans un puits.

Les tubes décrits dans ces deux documents, qui sont en métal, possèdent une faible flexibilité pour faciliter le mouvement de l'instrument. Cette flexibilité produit des déformations plastiques lors de son enroulement sur le touret, ou de son déroulement du touret. Le conducteur électrique qu'ils peuvent contenir sont disposés dans l'espace creux du tube. La mise en place d'un tel conducteur pose un problème, car elle ne peut être effectuée alors que le tube est enroulé. Ce tube est de plus relativement lourd.

Le brevet FR-B-1.249.236 décrit un tube flexible en acier utilisable pour forer le sol. Ce tube est très coûteux à fabriquer.

Tous les tubes traditionnellement utilisés craignent la corrosion et ne sont pas particulièrement adapté à réduire les frottements avec la paroi du puits au cours du déplacement de l'instrument, ni même à résister à ces frottements.

Les inconvénients des dispositifs selon l'art antérieur sont considérablement réduits, si ce n'est éliminés, par l'utilisation du dispositif selon la présente invention pour effectuer des mesures ou des interventions dans un puits foré, ce dispositif comportant une tige, ou jonc, reliée à un instrument de mesure ou d'intervention, ledit instrument étant disposé à une extrémité inférieure de la tige.

Selon ce dispositif, la tige est notamment élastique en flexion et rigide en compression, cette tige comportant au moins une ligne adaptée au transfert d'énergie ou d'informations, telle qu'une ligne électrique, fluidique, ou optique, la ligne étant noyée dans la tige, et la tige est adaptée à être enroulée sur au moins un touret et comporte un matériau composite ou un matériau polymérique non composite.

Le matériau composite pourra être constitué, par exemple, de fibres de verre, de carbone ou de polyaramide, tel du Kevlar qui est une marque déposée par Dupont de Nemours, ces fibres étant noyées dans une matrice en résine thermoplastique ou thermodurcissable.

Le matériau polymérique dépourvu d'éléments de renfort, pourra être choisi parmi les éléments du groupe des polymères suivants : polyamide, polyfluorure de vinylidène, polyéthylène haute densité réticulé.

La tige pourra être sensiblement pleine. Lorsque la tige comporte une fibre neutre le long de laquelle aucune contrainte de traction ou de compression n'apparaît lorsque l'on soumet ladite tige à une flexion, la ligne de transfert pourra être sensiblement disposée au voisinage de la fibre neutre. La tige pourra être adaptée à résister à la torsion.

La nature du matériau constituant la partie extérieure de la tige pourra être adaptée à diminuer le frottement entre la tige et la paroi du puits.

La tige pourra être fabriquée par une machine produisant en continu, notamment par extrusion ou par pultrusion.

La tige pourra comporter plusieurs lignes de transfert d'énergie ou d'informations.

La tige pourra être creuse et la ligne pourra être noyée dans l'épaisseur de ladite tige. La partie extérieure de la tige pourra comporter un agent antiabrasion.

L'invention sera bien comprise et ses avantages apparaîtront clairement à la lecture de la description suivante d'un exemple de réalisation illustré par les figures annexées dans lesquelles :

– la figure 1 représente un dispositif selon l'invention lors de sa mise en place dans le puits,

– la figure 2 illustre une variante du dispositif selon l'invention représentée à la figure 1,

– la figure 3, montre en détail la liaison entre l'extrémité inférieure de la tige et l'instrument permettant les mesures ou les interventions, et

– la figure 4, montre en coupe une tige creuse selon l'invention comportant des lignes de transfert.

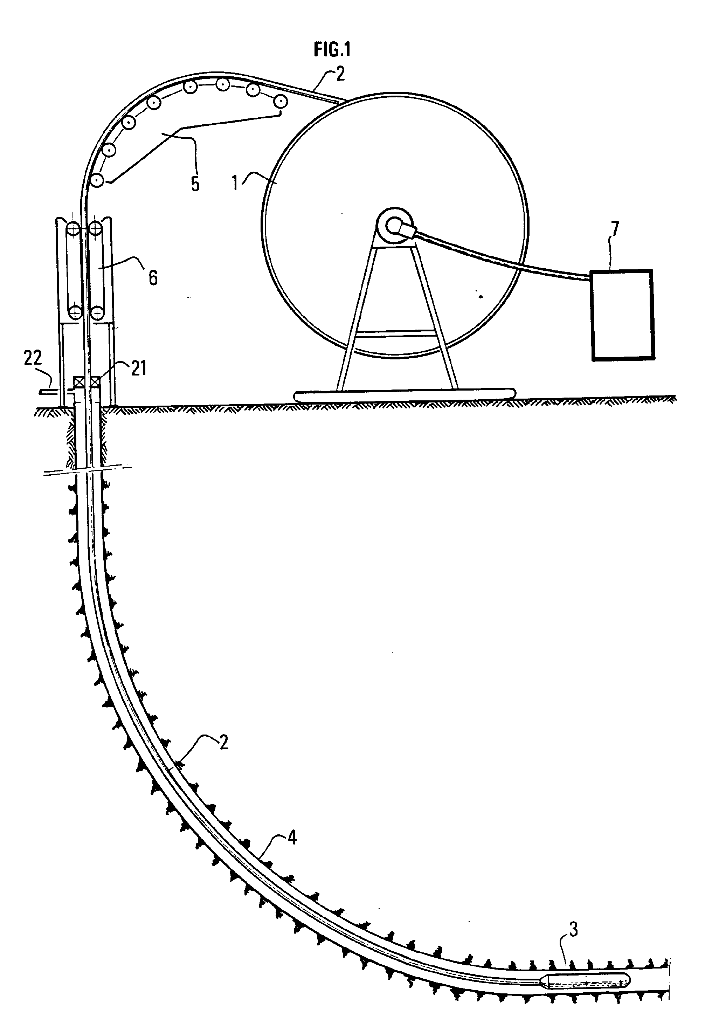

Sur la figure 1, la référence 1 indique le touret sur lequel est bobinée une tige 2 qui sert aux déplacements de l'instrument 3 dans le puits 4, de manière à effectuer les mesures ou les interventions dans une ou plusieurs zones du puits 4.

La tige 2, qui est très flexible, quitte le touret 1 en passant sur un organe de renvoi 5, tel un ensemble de poulies, adapté à positionner la tige dans l'axe du puits quelle que soit la position du touret et son remplissage, et traverse des moyens 6 de traction et de poussée adaptés à pousser la tige 2 dans le puits, à la retenir ou à l'en extraire.

Ces moyens 6 de traction et de poussée peuvent, par exemple, être constitués de deux chenilles en caoutchouc enserrant la tige 2 et se déplaçant dans le sens souhaité pour manoeuvrer la tige 2.

La tige 2, qui est résistante à la compression de manière à permettre une poussée sur l'instrument 3, est réalisée en un nombre très limité d'éléments et peut même n'en comporter qu'un seul.

La tige 2 comporte au moins une ligne adaptée en transfert d'énergie ou d'informations, telle une (ou plusieurs) ligne électrique, fluidique ou optique, qui permet de relier l'instrument 3 disposé dans le puits à l'extrémité inférieure de la tige à la surface où se trouve l'extrémité supérieure de la tige 2. A cette extrémité supérieure sont reliés, éventuellement par l'intermédiaire d'un connecteur tournant, des appareils 7 de contrôle ou de commande de l'instrument 3. Une telle tige peut être réalisée en matériau composite avec des fibres de renfort en verre, en carbone, en polyaramide noyées dans une matrice en résine thermoplastique ou thermodurcissable. Ce matériau composite pourra avantageusement être constitué de fibres de verre noyées dans une résine époxyde.

La nature de la matrice et des fibres peut être judicieusement choisie pour diminuer les frottements et l'usure due aux frottements entre la tige 2 et la paroi du puits 4 au cours des déplacements de l'instrument 3.

La ligne adaptée au transfert d'énergie et d'informations est avantageusement noyée dans la tige 2 au moment de sa fabrication.

La tige 2 peut aussi être réalisée dans un matériau polymérique résistant notamment aux contraintes mécaniques d'utilisation, et aux contraintes thermiques et chimiques rencontrées dans le puits. On a trouvé que le polymères thermoplastiques du type polyamide, polyfluorure de vinylidène ou polyéthylène haute densité réticulé permettent la réalisation d'une tige flexible légère et résistante à la corrosion selon l'invention.

Pour réaliser la tige 2, on pourra utiliser une machine de fabrication en continu et d'un type permettant de noyer la ou les lignes de transfert dans la tige. On pourra utiliser les techniques dites d'extrusion ou de pultrusion.

On appelle extrusion et pultrusion chacun des procédés par lequel une matière malléable est respectivement poussée par une presse dans une filière ou tirée à la sortie d'une filière. La tige 2 pourra être pleine (ou massive). Elle pourra aussi être creuse et la ligne de transfert pourra être noyée dans cette tige.

On pourra avantageusement ajouter au matériau composite ou polymérique constituant ladite tige 2 des agents antiabrasion destinés à réduire l'usure de ladite tige 2 et/ou de la paroi du puits.

La tige 2 pourra comporter des moyens lui permettant de résister aux efforts de torsion, telle une tresse de renfort disposée au voisinage de la périphérie de la tige.

La partie supérieure du puits 4 comporte des moyens d'obturation 21 du puits 4 et d'étanchéité avec la tige 2 qui permettent de maintenir l'instrument 3 dans le puits ou de déplacer l'instrument 3 alors qu'il est relié à la surface du sol par la tige 2. Une telle disposition se rencontre lorsque le puits est en production, un conduit 22 permettant alors l'évacuation des effluents produits.

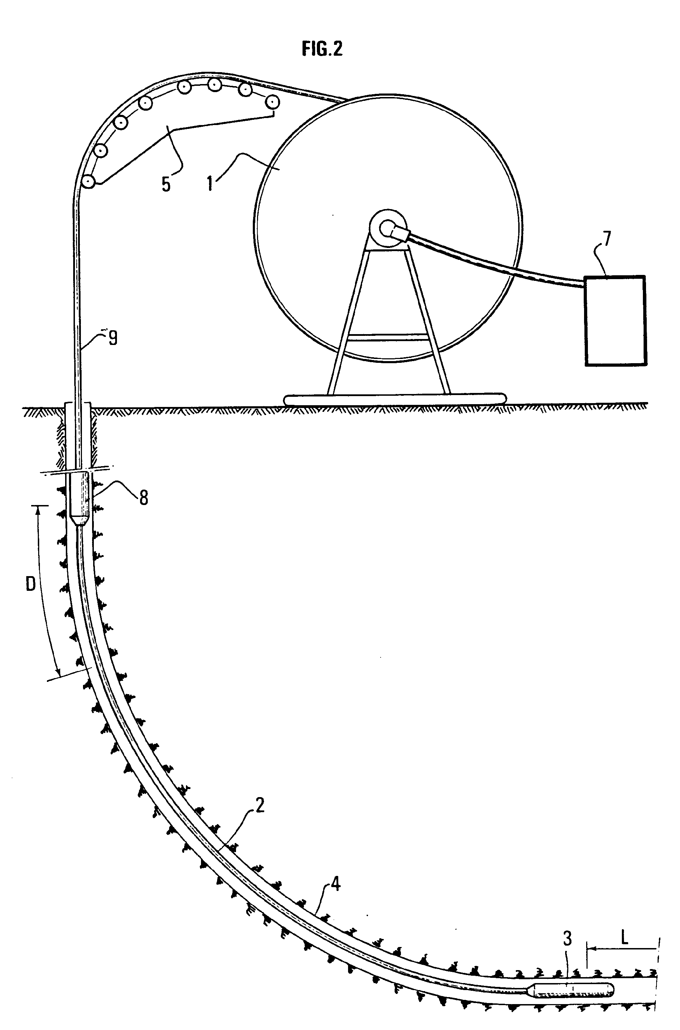

Selon une variante illustrée à la figure 2 du dispositif de la figure 1, sur laquelle la tige 2 relie l'instrument 3 au touret 1 disposé en surface, la tige 2 (Fig. 2) est seulement disposée entre l'instrument 3 et une masse-tige 8 adaptée à mettre en compression la tige 2, de façon à faire avancer l'instrument 3 dans le puits 4. La masse-tige est reliée à la surface du sol par un élément flexible 9 qui peut être une tige telle que celle reliant la masse-tige 8 à l'instrument 3, ou encore un câble pourvu de conducteurs, de lignes optiques ou fluidiques.

De cette manière, en service normal, seule la tige 2 disposée entre la masse-tige 8 et l'instrument 3 est soumise à une compression, alors que l'élément flexible 9 n'est soumis qu'à une traction.

Ceci permet notamment de réduire les dimensions transversales de l'élément flexible 9 et ainsi le coût du dispositif de mesure ou d'intervention.

L'élément flexible 9 comme la tige 2 sont enroulés sur le touret 1 et déroulés du touret par l'intermédiaire de l'organe de renvoi 5, la masse-tige 8 étant ôtée de la tige 2 et de l'élément flexible 9 pour permettre l'enroulement. On pourra également utiliser une masse-tige 8 adaptée à être enroulée sur le touret 1.

Adaptée aux mesures et interventions dans les puits fortement déviés, voire horizontaux, la longueur de la tige 2 sera telle que la distance D sur laquelle peut se déplacer la masse-tige 9 est au moins égale à la longueur L de la zone à explorer.

La manoeuvre de l'instrument 3, ou les informations provenant de celui-ci, sont véhiculés au travers de la tige 2, de l'élément flexible 9 et éventuellement la masse-tige 8, par les lignes de transfert ou les conducteurs de ceux-ci jusqu'à la surface où se trouvent les appareils 7 de contrôle et de commande de l'instrument 3.

D'une manière avantageuse, la tige 2 est réalisée en un seul tronçon, par exemple 1000, 2000, 3000 mètres, mais on ne sortira pas du cadre de l'invention en utilisant pour cette tige 2 un nombre restreint de tronçons assemblés les uns à la suite des autres.

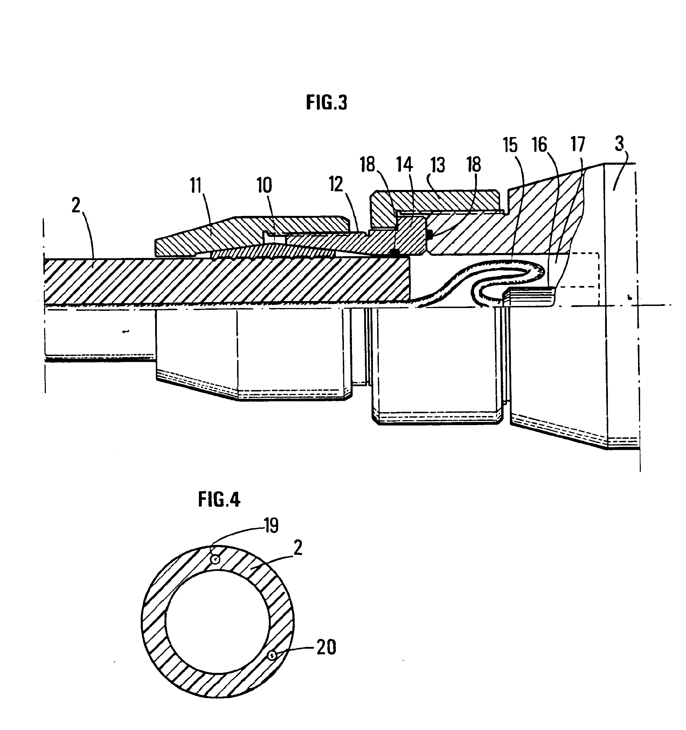

La figure 3 montre en détail la liaison mécanique entre l'extrémité inférieure de la tige 2 et l'instrument 3. La liaison mécanique entre la tige 2 et l'instrument 3 qui ont respectivement (par exemple) des diamètres de 25 millimètres et 75 millimètres, est notamment assurée par l'ancrage d'une olive 10 dans la tige 2, l'ancrage étant réalisé par une coopération des écrous 11 et 12 ayant des alésages coniques qui pressent l'olive 10 sur la tige, cet ensemble d'ancrage 10, 11, 12 étant fixé au corps de l'instrument 3 par un écrou 13 de collet coopérant avec un collet 14 solidaire de l'ensemble d'ancrage, notamment de l'écrou 12.

La liaison électrique de la ligne de transfert 15 avec l'instrument 3 est effectuée par une fiche femelle 16 coopérant avec une traversée électrique étanche de l'instrument.

Une fiche femelle et une traversée utilisables pour cette liaison sont par exemple disponibles chez la société DEUTSCH sous la référence type 9701.

De manière à notamment éviter les pertes électriques à la connexion, l'espace 17 entre l'extrémité de la tige 2 et l'instrument 3 est rempli d'un fluide isolant, tel de la graisse de silicone, et est confiné grâce à des moyens d'étanchéité, tels les joints toriques 18.

Sur la figure 4, qui montre en coupe une variante de la tige selon l'invention, la tige 2 est creuse et comporte un ou plusieurs conducteurs électriques, ou plus généralement au moins une ligne de transfert noyée dans l'épaisseur de la tige. Cette disposition particulière permet notamment d'augmenter l'inertie en flexion de la tige en optimisant la matière utilisée, de se servir de la partie centrale vide pour disposer un fluide, et éventuellement pour faire circuler un fluide de travail, tel de la boue de forage. Les lignes de transfert 19, 20 peuvent être disposées symétriquement ou asymétriquement dans la tige 2.

## Revendications

1. Dispositif pour effectuer des mesures ou des interventions dans un puits (4) foré comportant une tige (2), ou jonc, et un instrument (3) de mesure ou d'intervention, ledit instrument étant disposé à une extrémité inférieure de ladite tige, ladite tige étant élastique en flexion et rigide en compression et étant adaptée à être enroulée sur au moins un touret, caractérisé en ce que ladite tige comporte au moins une ligne adaptée au transfert d'énergie ou d'informations, telle une ligne électrique, fluidique, ou optique, ladite ligne étant noyée dans ladite tige, et en ce que ladite tige comporte un matériau composite ou un matériau polymérique non composite.

2. Dispositif selon la revendication 1, caractérisé en ce que ladite tige (2) est sensiblement pleine.

3. Dispositif selon l'une des revendications 1 et 2, ladite tige comportant une fibre neutre le long de laquelle aucune contrainte de traction ou de compression n'apparaît lorsque l'on soumet ladite tige à une flexion, caractérisé en ce que ladite ligne de transfert est sensiblement disposée au voisinage de ladite fibre neutre.

4. Dispositif selon l'une des revendications 1 à 3, caractérisé en ce que ladite tige est adaptée à résister à la torsion.

5. Dispositif selon l'une des revendications 1 à 4, caractérisé en ce que le matériau composite est constitué par des fibres de verre, de carbone ou de polyaramide noyées dans une matrice en résine thermoplastique ou thermodurcissable.

6. Dispositif selon la revendication 5, caractérisé en ce que ledit matériau composite comporte des fibres de verres noyées dans une résine époxyde.

7. Dispositif selon l'une des revendications 1 à 4, caractérisé en ce que le matériau polymérique dépourvu d'éléments de renfort, est choisi parmi les éléments du groupe des polymères suivants : polyamide, polyfluorure de vinylidène, polyéthylène haute densité réticulé.

8. Dispositif selon l'une des revendications 1 à 7, caractérisé en ce que la nature du matériau constituant la partie extérieure de la tige (2) est adaptée à diminuer le frottement entre ladite tige et la paroi du puits (4).

9. Dispositif selon l'une des revendications 1 à 8, caractérisé en ce que ladite tige (2) est fabriquée par une machine produisant en continu.

10. Dispositif selon l'une des revendications 1 à 9, caractérisé en ce que ladite tige (2) est fabriquée par extrusion ou pultrusion.

11. Dispositif selon la revendication 1, caractérisé en ce que ladite tige (2) est creuse et en ce que ladite ligne (19, 20) est noyée dans l'épaisseur de ladite tige.

12. Dispositif selon l'une des revendications 1 à 11, caractérisé en ce que la partie extérieure de ladite tige (2) comporte un agent antiabrasion.

13. Procédé utilisant le dispositif selon l'une des revendications 1 à 12, la tige étant enroulée sur un touret, caractérisé en ce que lorsque l'on déroule la tige du touret pour l'introduire dans ledit puits, ladite tige n'est substantiellement soumise qu'à des déformations élastiques.

14. Application du dispositif selon l'une des revendications 1 à 12, à un puits de production d'un effluent pétrolier.

## Patentansprüche

1. Anordnung zum Durchführen von Messungen oder Eingriffsvorgängen in einem gebohrten Schacht oder Bohrloch (4) mit einer Schwerstange und einem Meß- oder Eingriffsinstrument (3), wobei das Instrument an einem unteren Ende der Stange angeordnet ist, wobei die Stange biegeelastisch und kompressionssteif ist und so ausgelegt, daß sie sich um wenigstens einen Haspel wickeln läßt, dadurch gekennzeichnet, daß diese Stange wenigstens eine Leitung umfaßt, die zur Energie- oder Informationsübertragung geeignet ist, beispielsweise eine elektrische Leitung, eine Fluidique-Leitung oder optische Leitung und die Leitung in dieser Stange eingebettet ist und daß die Stange ein Verbundmaterial oder ein polymeres Nicht-Verbundmaterial umfaßt.

2. Anordnung nach Anspruch 1, dadurch gekennzeichnet, daß diese Stange (2) im wesentlichen massif ist.

3. Anordnung nach einem der Ansprüche 1 und 2, wobei die Stange eine neutrale Faser umfaßt, längs deren keinerlei Zug- oder Kompressionsbeanspruchung eintritt, wenn man diese Stange einem Biegevorgang aussetzt, dadurch gekennzeichnet, daß diese Übertragungsleitung im wesentlichen benachbart dieser neutralen Faser angeordnet ist.

4. Anordnung nach einem der Ansprüche 1 bis 3, dadurch gekennzeichnet, daß diese Stange so ausgelegt ist, daß sie torsionsbeständig ist.

5. Anordnung nach einem der Ansprüche 1 bis 4, dadurch gekennzeichnet, daß dieses Verbundmaterial gebildet wird durch Glas-, Kohlenstoff- oder Polyaramid-Fasern, die in einer Matrix aus thermoplastischem oder wärmeaushärtbarem Harz eingebettet sind.

6. Anordnung nach Anspruch 5, dadurch gekennzeichnet, daß dieses Verbundmaterial in ein Epoxyharz eingebettete Glasfasern umfaßt.

7. Anordnung nach einem der Ansprüche 1 bis 4, dadurch gekennzeichnet, daß das von Verstärkungselementen freie Polymermaterial gewählt ist aus den Elementen der Gruppe der folgenden Polymere: Polyamid, Polyvinylidenfluorid, vernetztes Polyethylen hoher Dichte.

8. Anordnung nach einem der Ansprüche 1 bis 7, dadurch gekennzeichnet, daß die Art des den äußeren Teil der Stange (2) bildenden Materials so ausgelegt ist, daß die Reibung zwischen dieser Stange und der Bohrlochwandung (4) vermindert wird.

9. Anordnung nach einem der Ansprüche 1 bis 8, dadurch gekennzeichnet, daß die Stange (2) hergestellt ist mittels einer kontinuierlich arbeitenden Maschine.

10. Anordnung nach einem der Ansprüche 1 bis 9, dadurch gekennzeichnet, daß diese Stange (2) durch Extrusion oder Pultrusion hergestellt ist.

11. Anordnung nach Anspruch 1, dadurch gekennzeichnet, daß diese Stange (2) hohl ist und daß diese Leitung (19, 20) in die Dicke dieser Stange eingebettet ist.

12. Anordnung nach einem der Ansprüche 1 bis 11, dadurch gekennzeichnet, daß der Außenteil dieser Stange (2) ein Antiabrasionsmittel umfaßt.

13. Verfahren unter Verwendung der Anordnung nach einem der Ansprüche 1 bis 12, wobei die Stange auf einen Haspel gewickelt ist, dadurch gekennzeichnet, daß dann, wenn man die Stange vom Haspel abwickelt, um sie in dieses Bohrloch einzuführen, diese Stange praktisch nur elastischen Verformungen ausgesetzt wird.

14. Anwendung der Anordnung nach einem der Ansprüche 1 bis 12 auf ein Produktionsbohrloch eines Erdölabstroms.

**Claims**

1. A device for carrying out measurings or interventions in a drilled well (4), comprising a rod (2), or stem, and a measuring or intervention instrument (3), said instrument being arranged at a lower end of said rod, said rod exhibiting a flexural elasticity and a compressive rigidity, characterized in that said rod comprises at least one adapted energy or information transfer line such as an electric, fluid or optical line, said line being embedded in said rod, said rod being adapted for being wound round at least one reel, and in that said rod comprises a composite or a non composite polymeric material.

2. A device as claimed in claim 1, wherein said rod (2) is substantially solid.

3. A device as claimed in any one of claims 1 and 2, said rod comprising a neutral fiber along which no tensile or compressive stress appears when said rod is subjected to a flexion, wherein said transfer line is substantially arranged in the proximity of said neutral fiber.

4. A device as claimed in any one of claims 1 to 3, wherein said rod is adapted for withstanding torsion.

5. A device as claimed in any one of claims 1 to 4, wherein the composite material consists of glass, carbon or polyaramid fibers embedded in a thermoplastic or thermosetting resin matrix.

6. A device as claimed in claim 5, wherein said composite material comprises glass fibers embedded in an epoxy resin.

7. A device as claimed in any one of claims 1 to 4, wherein the polymeric material devoid of reinforcing elements is selected from the elements of the following polymer group : polyamide, vinylidene polyfluoride, high-density cross-linked polyethylene.

8. A device as claimed in any one of claims 1 to 7, wherein the nature of the material constituting the outer part of rod (2) is adapted for reducing the friction between said rod and the wall of well (9).

9. A device as claimed in any one of claims 1 to 9, wherein said rod (2) is manufactured by a continuously producing machine.

10. A device as claimed in any one of claims 1 to 9, wherein said rod (2) is made by extrusion or pultrusion.

11. A device as claimed in claim 1, wherein said rod (2) is hollow and wherein said line (19, 20) is embedded in the thickness of said rod.

12. A device as claimed in any one of claims 1 to 11, wherein the outer part of said rod (2) comprises an anti-abrasion agent.

13. A process utilizing the device claimed in any one of claims 1 to 12, the rod being wound round a reel, wherein, when the rod is unwound from the reel to be introduced into said well, said rod is substantially only subjected to elastic deformations.

14. Application of the device claimed in any one of claims 1 to 12 to a well for producing a petroleum effluent.

**FIG.1**

**FIG.2**

**FIG.3**

**FIG.4**